# EUROPEAN PATENT SPECIFICATION

(11) **EP 4 141 300 B1**
(45) Date of publication and mention of the grant of the patent: **02.07.2025**
(21) Application number: 22189401.7
(22) Date of filing: 09.08.2022
(51) Int. Cl.: F16K 31/04, F16K 31/53

(54) **VALVE ACTUATOR**
VENTILAKTUATOR
ACTIONNEUR DE SOUPAPE

(30) Priority: 30.08.2021 KR 20210114406
(43) Date of publication of application: 01.03.2023
(73) Proprietor: LG Electronics Inc., Seoul 07336 (KR)
(72) Inventor: KANG, Joohang, 06772 Seoul (KR); AHN, Youngchan, 06772 Seoul (KR)
(74) Representative: Vossius & Partner Patentanwälte Rechtsanwälte mbB

(56) References cited:
- KR-A- 20090 073 402
- US-B2- 10 527 136

## Description

The present disclosure relates to a valve actuator for automatically opening/closing a valve, and more particularly, to a valve actuator having an over-torque interruption function.

Refrigerant is essentially used in an air conditioner which is one of the air conditioning devices, and Freon gas used as the refrigerant acts as a factor of global warming.

Therefore, in recent years, refrigerant has been developed, which is not concerned with the global warming, and the newly developed refrigerant does not act as the factor of the global warming, but there is a risk of a fire in the case of refrigerant leakage due to an ignition propensity, and as a result, a valve actuator for automatically actuating a valve for interrupting leakage in the case of the refrigerant leakage has been developed.

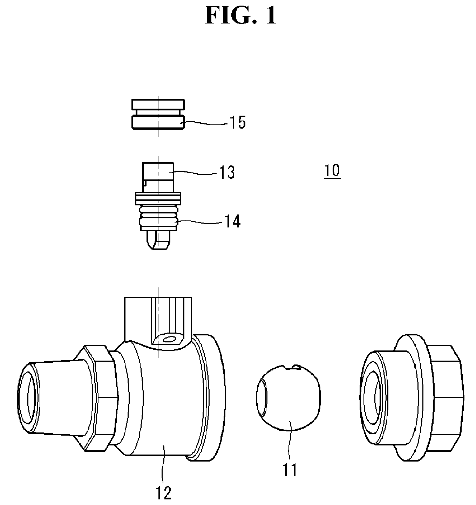

As a valve installed between an outdoor unit and an indoor unit of the air conditioner and preventing the refrigerant leakage, a ball valve is primarily used, and as illustrated in FIG. 1, a ball valve 10 includes a ball 11 with a path, a pipe 12 into which the ball 11 is inserted, a stem 13 connected to the pipe 12, a seal member 14 installed in the stem 13, and a stem fixation bolt 15.

A valve actuator for controlling the ball valve having such a configuration generally includes a motor and a gear assembly, and controls the valve by controlling rotation of the motor by using a sensor such as a limit switch, etc., or controlling the rotation of the motor by using a step motor.

As an example, Korean Patent Application KR 2009 0073402 A (hereinafter, referred to as "prior patent") discloses a valve actuator configured in such a manner that when a projection portion of an output gear connected to the stem of the ball valve among a plurality of gears provided in the gear assembly rotates at 90 degrees or more, an electronic limit switch is pressed to stop the motor.

However, the valve actuator of the prior patent having the electronic limit switch has a problem in that sensors' peculiar instability in a harsh environment.

US 10 527 136 B2 discloses a device for transmitting movement between a first rotating and driving toothed element and a second rotating and driven toothed element within a preset angular range.

The present disclosure provides a valve actuator capable of securing durability and driving stability.

The present disclosure also provides a valve actuator removing instability of an electronic sensor.

The present disclosure also provides a valve actuator which need not include a separate PCB for a motor stop signal.

The objects of the present disclosure are not limited to the above-mentioned objects, and other objects and advantages of the present disclosure that are not mentioned can be understood by the following description, and will be more clearly understood by embodiments of the present disclosure.

Further, it will be readily appreciated that the objects and advantages of the present disclosure can be realized by means and combinations shown in the claims.

The present invention is defined by the appended independent claims 1 and 10, and preferred aspects of the present invention are defined by the appended dependent claims. A valve actuator according to an exemplary embodiment of the present disclosure, but not falling into the same scope of the independent claims, includes: a motor; a gear assembly including an input gear rotated by driving force of the motor, an output gear receiving rotational force of the input gear, and at least one power transmission gear transmitting the rotational force of the input gear to the output gear; a valve output shaft coupled to the output gear and configured to be actuated to close a valve; and a selective power transmission unit for interrupting rotation of the output gear after the output gear is rotated at a predetermined angle by the rotational force of the input gear, and the selective power transmission unit includes a lift member releasing meshing of the first gear and the second gear by moving the first gear to an upper side after the output gear is rotated at the predetermined angle or a friction member provided at the output gear so as to brake the rotation of the first gear by contacting the first gear after the output gear is rotated at the predetermined angle.

The valve actuator further comprises a case in which the gear assembly is installed.

The motor may be installed on or outside the case.

The power transmission gear includes a first gear coupled to the input gear, a second gear coupled to the first gear, and a third gear coupled to each of the second gear and the output gear.

According to an exemplary embodiment of the invention the selective power transmission unit includes a lift member configured to disengage the first gear from the second gear by the lift member moving and thus pushing the first gear away from the second gear due to interference with a portion of the output gear after the output gear is rotated at the predetermined angle.

The lift member may include a body connected to the valve output shaft on or above an upper side of the output gear and a lever extended from the body and having an end portion positioned on or below a lower side of the first gear.

A projection may be formed on one of the output gear and th body, and a groove portion into which the projection is inserted may be formed at the other one of the output gear and the body. A guide groove guiding vertical movement of the body may be formed at one of the valve output shaft and the body, and a guide portion inserted into the guide groove may be formed at the other one of the valve output shaft and the body.

An elastic member pressing the first gear downward may be positioned at an upper side of the first gear.

A friction pad providing frictional force to the first gear may be formed at the lever or the first gear.

A friction protrusion providing frictional force to the first gear may be formed at the lever or the first gear.

The lift member may include a body fixed to a lateral portion of the output gear, and a lever extended from the body and having an end portion positioned on or below a lower side of the first gear.

When the output gear contacts the body, the body may be configured to be deformed so that the lever contacts and pushes the first gear away from the second gear.

According to another exemplary embodiment of the invention the selective power transmission unit includes a friction member provided at the output gear so as to brake the rotation of the first gear by contact with the first gear after the output gear is rotated at the predetermined angle.

The output gear is installed at the valve output shaft to be vertically movable.

A projection portion may be formed at one of the output gear and the case, and an inclined surface on which the projection portion is positioned may be formed at the other one of the output gear and the case.

Threads, which are capalbe of being engaged with each other, may be formed at the output gear and the valve output shaft.

According to the present disclosure, driving force of a motor is transmitted to a valve output shaft through a gear assembly and a valve is closed, and then the driving force of the motor is not transmitted to the valve output shaft by the selective power transmission unit to prevent damage to the gear assembly and/or the motor due to over-torque and apply a motor of a type in which an RPM control is inaccurate.

In addition, since the electronic sensor is not used, the instability of the electronic sensor can be removed, and a separate PCB for a motor stop signal need not be provided, thereby increasing durability, and improving complexity and material cost.

In addition to the above-described effects, the specific effects of the present disclosure will be described below together while describing the specific matters for the present disclosure.

### BRIEF DESCRIPTION OF THE DRAWINGS

FIG. 1 is an exploded perspective view illustrating a configuration of a general ball valve.
FIG. 2 is a diagram illustrating a coupling state of a valve actuator and a ball valve according to an exemplary embodiment of the present disclosure.
FIG. 3 is an exterior perspective view of the valve actuator illustrated in FIG. 2.
FIG. 4 is an exploded perspective view of a valve actuator according to a first exemplary embodiment of the present disclosure.
FIG. 5 is a perspective view illustrating a coupling state of a gear assembly and a lift member illustrated in FIG. 4.
FIG. 6 is a bottom perspective view of the gear assembly and the lift member illustrated in FIG. 5.
FIGS. 7 and 8 are diagrams illustrating an actuation state of the valve actuator according to the first exemplary embodiment of the present disclosure.

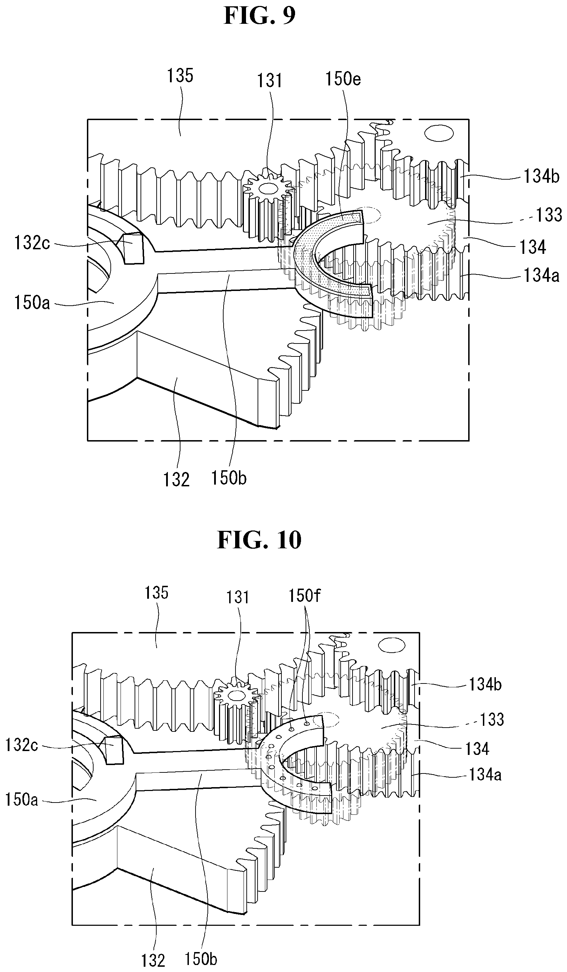

FIGS. 9 and 10 are perspective views of a main part illustrating a modified exemplary embodiment of the lift member provided in the valve actuator according to the first exemplary embodiment of the present disclosure.
FIG. 11 is a perspective view of a valve actuator according to a second exemplary embodiment of the present disclosure.
FIG. 12 is a diagram illustrating an actuation state of the valve actuator according to the second exemplary embodiment of the present disclosure.
FIG. 13 is a perspective view of a valve actuator according to a third exemplary embodiment of the present disclosure.
FIGS. 14 and 15 are diagrams illustrating a configuration of a main part for moving an output gear in a vertical direction in the valve actuator according to the third exemplary embodiment of the present disclosure.

### DETAILED DESCRIPTION OF THE EMBODIMENTS

The present disclosure will be described more fully hereinafter with reference to the accompanying drawings, in which exemplary embodiments of the invention are shown. The present disclosure can be realized in various different forms, and is not limited to the exemplary embodiments described herein.

A part irrelevant to the description will be omitted to clearly describe the present disclosure, and the same elements will be designated by the same reference numerals throughout the specification. Further, some exemplary embodiments of the present disclosure will be described in detail with reference to illustrative drawings.

When reference numerals refer to components of each drawing, although the same components are illustrated in different drawings, the same components are denoted by the same reference numerals as possible. Further, in describing the present disclosure, a detailed description of known related configurations and functions may be omitted to avoid unnecessarily obscuring the subject matter of the present disclosure.

In describing the component of the present disclosure, when it is disclosed that any component is "connected", "coupled", or "linked" to other components, it should be understood that another component may be "interposed" between respective components or the respective components may be "connected", "coupled", or "linked" through another component.

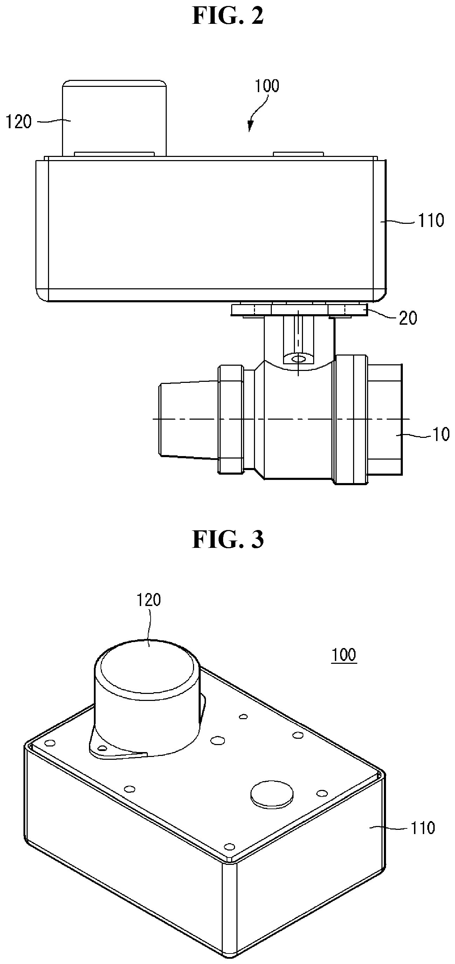

FIG. 2 is a diagram illustrating a coupling state of a valve actuator and a ball valve according to an exemplary embodiment of the present disclosure and FIG. 3 is an exterior perspective view of the valve actuator illustrated in FIG. 2.

As illustrated, in order to install the valve actuator 100 in the ball valve 10, a plate 20 may be installed above the ball valve 10, and the valve actuator 100 may be coupled to the plate 20.

The plate 20 may be fixed to an upper end of the ball valve 10 by a fastening member such as a fastening screw, etc., and the valve actuator 100 may be fixed to the plate 20 by the fastening member such as the fastening screw, etc.

The valve actuator 100 includes a case 110.

The case 110 provides a space in which a motor 120 and a gear assembly provided in the valve actuator 100 are installed, the motor 120 is installed on an upper surface of the case 110 outside the case 110, and the gear assembly is disposed in an internal space of the case 110.

The motor 120 may be a motor of a type in which RPM control is accurate. However, this is not required, and the motor 120 may be a motor of a type in which the RPM control is inaccurate. That is, since the valve actuator according to the exemplary embodiment of the present disclosure may selectively transmit power by a mechanical structure, damage to the gear assembly may be prevented and the ball valve may be accurately controlled while using the motor of the type in which the RPM control is inaccurate.

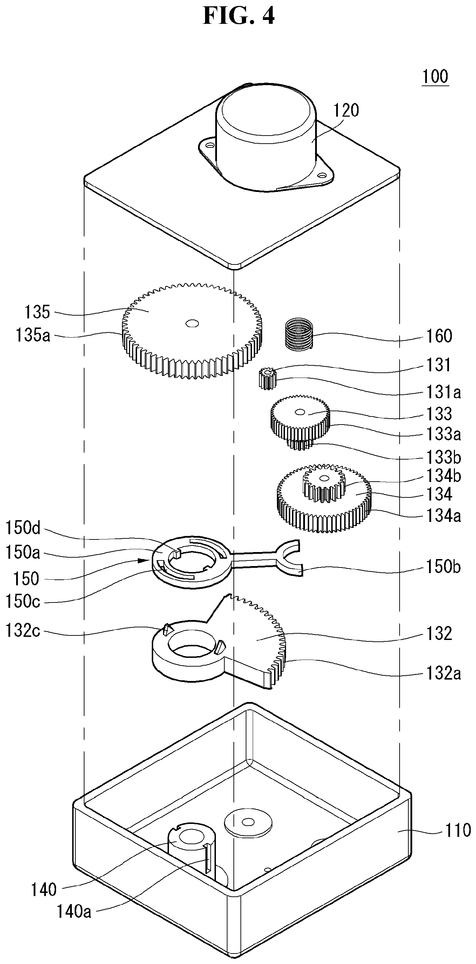

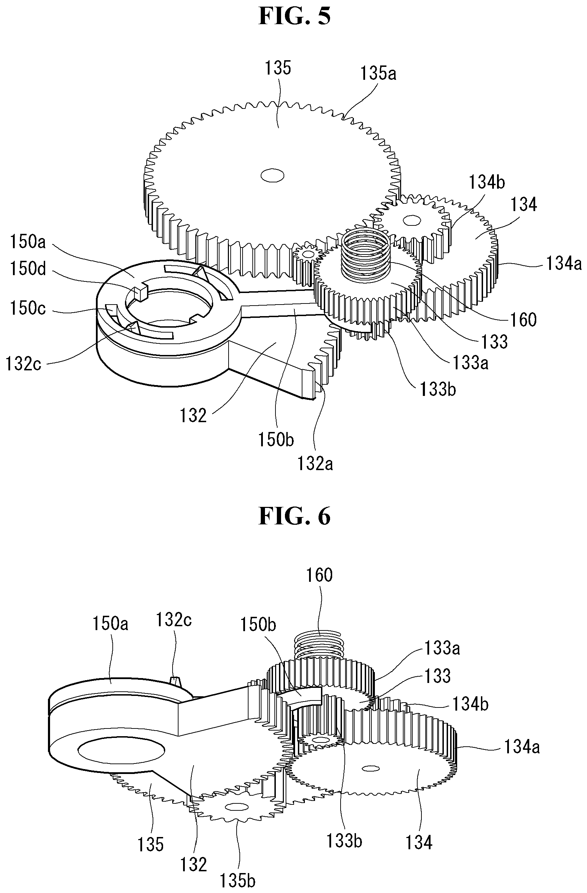

FIG. 4 is an exploded perspective view of a valve actuator according to a first exemplary embodiment of the present disclosure, FIG. 5 is a perspective view illustrating a coupling state of a gear assembly and a lift member illustrated in FIG. 4, and FIG. 6 is a bottom perspective view of the gear assembly and the lift member illustrated in FIG. 5.

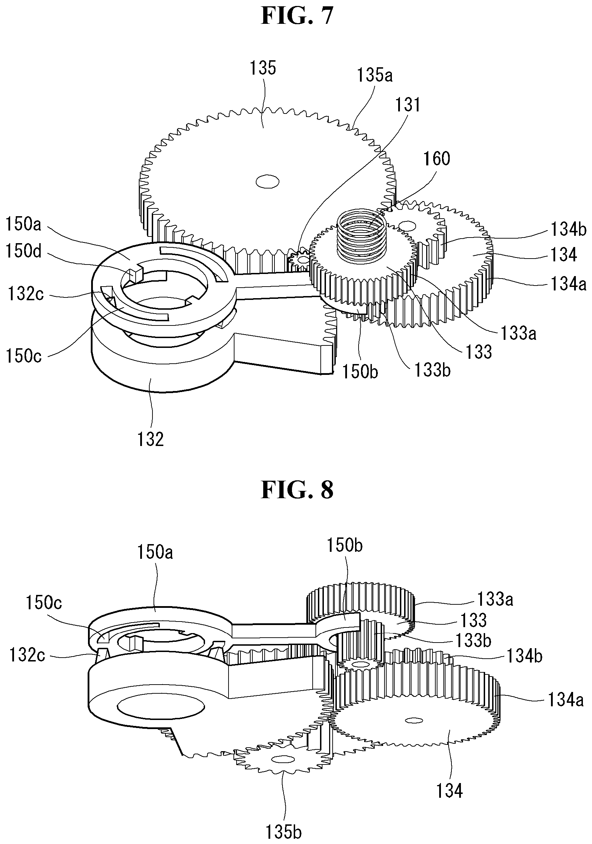

In addition, FIGS. 7 and 8 are diagrams illustrating an actuation state of the valve actuator according to the first exemplary embodiment of the present disclosure.

As illustrated, the gear assembly includes an input gear 131 coupled and/or connected to a rotational shaft of the motor 120 and receiving the driving force of the motor 120, an output gear 132 coupled to a valve output shaft 140 and transmitting rotational force of the input gear 131 to the valve output shaft 140, and at least one power transmission gear transmitting the rotational force of the input gear 131 to the output gear 132.

Hereinafter, it will be described as an example that the power transmission gear is constituted by first to third gears, but the number of power transmission gears may be appropriately changed.

In addition, in the exemplary embodiment, while the rotational force of the input gear is transmitted to the output gear through the power transmission gear, a speed is reduced by the gear assembly or the power transmission gear.

The input gear 131 includes a tooth portion 131a.

A first gear 133 coupled to the input gear 131 includes a first tooth portion 133a physically directly coupled to the toot portion 131a of the input gear 131 and a second tooth portion 133b disposed below the first tooth portion 133a on an axis of the first gear 133.

A first tooth portion 134a of a second gear 134 is physically directly coupled to the second tooth portion 133b of the first gear 133, and the second tooth portion 134b is positioned above the first tooth portion 134a on the axis of the second gear 134.

In addition, a third gear 135 includes a first tooth portion 135a physically directly coupled to the second tooth portion 134b of the second gear 134, and a second tooth portion 135b positioned below the first tooth portion 135a on the axis of the third gear 135.

In addition, a tooth portion 132a of the output gear 132 is physically directly coupled to the second tooth portion 135b of the third gear 135, and the output gear 132 is coupled to the valve output shaft 140.

The tooth portion 132a of the output gear 132 may be formed in an arc shape.

In the exemplary embodiment, after the output gear 132 is rotated at a predetermined angle (e.g., 90 degrees) by the rotational force of the input gear 131, a selective power transmission unit for interrupting the rotation of the output gear 132 includes a lift member that moves the first gear upward and releasing the engagement of the first gear 133 and the second gear 134.

In the exemplary embodiment, the lift member 150 includes a body 150a coupled to the valve output shaft 140 above the output gear 132 and a lever 150b extended from the body 150a and having an end portion positioned below the first gear 131.

In addition, in order to move the lift member 150 in the vertical direction, a projection portion 132c is formed in the output gear 132, and a groove portion 150c into which the projection portion 132c of the output gear 132 is inserted is formed in the body 150a of the lift member 150.

In addition, a guide groove 140a for guiding vertical movement of the lift member 150 is formed in the valve output shaft 140, and a guide portion 150d inserted into the guide groove 140a is formed in the body 150a of the lift member 150.

In addition, an elastic member pressing the first gear 133 downward, e.g., a coil spring 160 is positioned above the first gear 133.

Accordingly, in a state in which the gear assembly 130 and the lift member 150 are coupled as illustrated in FIGS. 5 and 6, the projection portion 132c of the output gear 132 is positioned within the groove portion 150c provided in the body 150a of the lift member 150 within a normal actuation range of the valve actuator.

In addition, in this state, the body 150c of the lift member 150 is seated on the output gear 132.

Here, the "normal actuation range of the valve actuator" means a state in which driving of the motor 120 is stopped and an initial state in which the motor 120 is driven in order to close the path by controlling the ball valve 10.

However, when the motor 120 is driven in order to close a path by controlling the ball valve 10, the output gear 132 is rotated.

In this case, since the projection portion 132c of the output gear 132 is positioned within the groove 150c provided in the body 150a of the lift member 150, only the output gear 132 is rotated in a state in which the lift member 150 is stopped.

However, after the output gear 132 is rotated at a predetermined angle, e.g., 90 degrees and the path of the ball valve is thus closed, the projection portion 132c of the output gear 132 deviates from the groove portion 150c provided in the body 150a of the lift member 150 and the lift member 150 moves upward while the projection portion 132c starts to deviate from the groove portion 150c provided in the body 150a of the lift member 150, as illustrated in FIGS. 7 and 8.

In this case, the lift member 150 moves by a mutual actuation of the guide groove 140a provided in the valve output shaft 140 and a guide portion 150d provided in the body 150a of the lift member 150.

Accordingly, since the lever 150b provided in the lift member 150 moves the first gear 133 upward, the engagement of the second tooth portion 133b of the first gear 133a and the first tooth portion 134a of the second gear 134 is released, and as a result, the rotational force of the input gear 131 is not transmitted to the output gear 132.

Meanwhile, in order to more effectively achieve upward movement of the first gear 133, at least one of a friction pad 150e or a friction protrusion 150f may be provided at an end portion of the lever 150b, and at least one of the friction pad or the friction protrusion may be provided even on a lower surface of the first gear 133.

Hereinafter, other exemplary embodiments will be described.

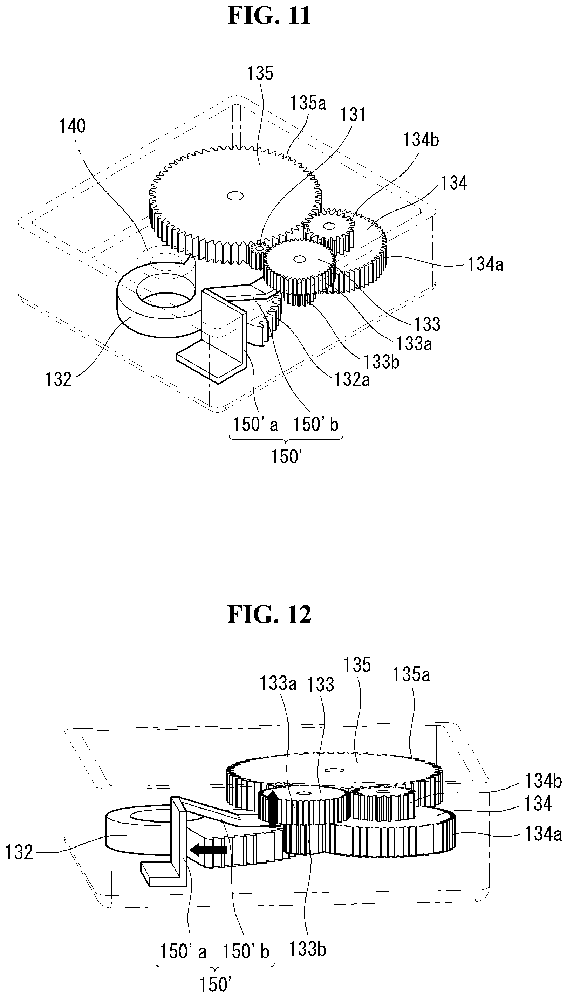

FIG. 11 is a perspective view of a valve actuator according to a second exemplary embodiment of the present disclosure and FIG. 12 is a diagram illustrating an actuation state of the valve actuator according to the second exemplary embodiment of the present disclosure.

In the valve actuator according to the exemplary embodiment, since the remaining configurations except for the lift member are configured in the same or similar manner as the first exemplary embodiment, a detailed description thereof will be omitted.

In the exemplary embodiment, a lift member 150' includes a body 150'a coupled to a lateral portion of the output gear 132 and a lever 150'b extended from the body 150'a and having an end portion positioned below the first gear 133.

Accordingly, in a state in which the gear assembly 130 and the lift member 150' are coupled, the tooth portion 132a of the output gear 132 is spaced apart from the body 150'a of the lift member 150' within the normal actuation range of the valve actuator.

However, when the motor 120 is driven in order to close a path by controlling the ball valve 10, the output gear 132 is rotated.

In addition, after the output gear 132 is rotated at a predetermined angle, i.e., 90 degrees and the path of the ball valve is thus closed, the tooth portion 132a of the output gear 132 contacts the body 150'a of the lift member 150', and when the output gear 132 is continuously rotated, the lever 150'b is lifted upward while the body 150'a of the lift member 150' is transformed in an arrow direction.

Accordingly, since the first gear 133 moved upward by the lever 150'b provided in the lift member 150', the engagement of the second tooth portion 133b of the first gear 133a and the first tooth portion 134a of the second gear 134 is released, and as a result, the rotational force of the input gear 131 is not transmitted to the output gear 132.

Meanwhile, in order to more effectively achieve upward movement of the first gear 133, at least one of the friction pad or the friction protrusion may be provided at an end portion of the lever 150'b, and at least one of the friction pad or the friction protrusion may be provided even on the lower surface of the first gear 133, as described in the exemplary embodiment described above.

It is described as an example that the selective power transmission unit of the valve actuator includes the lift member and the engagement of the first gear and the second gear is thus released in the above exemplary embodiments, but it is also possible to brake the first gear not to be rotated instead of releasing the engagement of the first gear and the second gear.

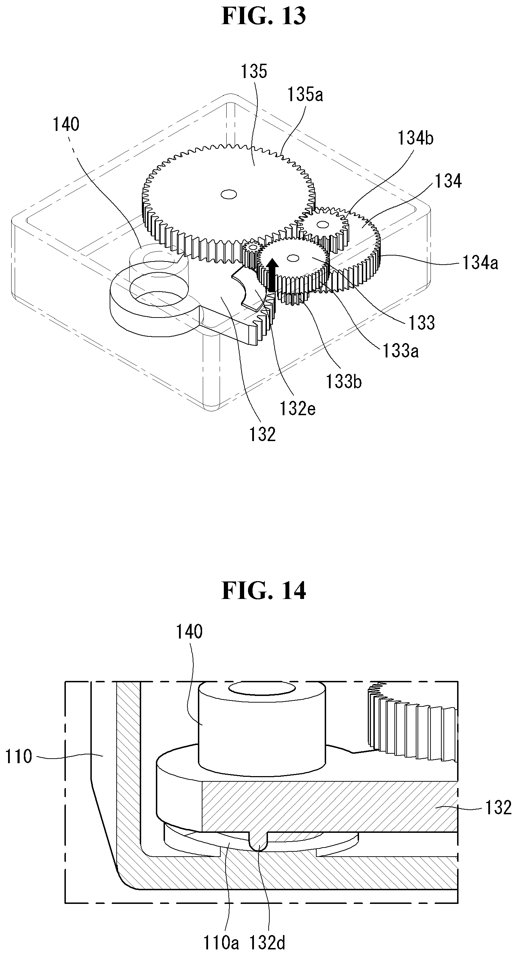

Hereinafter, a valve actuator according to a third exemplary embodiment of the present disclosure will be described with reference to FIGS. 13 to 15.

The valve actuator according to the third exemplary embodiment does not include the lift member according to the first and second exemplary embodiments described above, but includes the friction member provided in the output gear in order to brake the first gear by using the rotation of the output gear.

In the exemplary embodiment, the output gear 132 is coupled to the valve output shaft 140 to be vertically movable.

To this end, the projection portion 132d may be formed on the lower surface of the output gear 132 and an inclination surface 110a at which the projection portion 132d is positioned may be formed in the case 110.

In addition, the friction member such as a friction pad 132e, etc., may be provided in the output gear 132, and the fiction pad such as a friction pad, etc., may be provided even in the first gear 133 at a location facing the friction pad 132d of the output gear 132.

In the exemplary embodiment, since a safety rte of the first gear among the first to third gears is the highest, the first gear 133 is braked by using the friction pad 132e of the output gear 132.

For example, the input gear 131 may have a safety rte of 3.0, the first gear may have a safety rate of 1.8, the second gear may have a safety rate of 1.6, and the third gear may have a safety rate of 1.1.

According to such a configuration, the projection portion 132d of the output gear 132 is positioned on the inclination surface 110a of the case 110 within the normal actuation range of the valve actuator.

However, when the motor 120 is driven and the output gear 132 is thus rotated, the path of the valve is closed, and even then, when the motor 120 is continuously driven, the protrusion 132c of the output gear 132 moves along the inclination surface 110a, and then deviates from the inclination surface 110a.

Accordingly, the output gear 132 moves upward while the protrusion 132c moves along the inclination surface 110a, and as a result, the friction pad 132e of the output gear 132 is in close contact with the lower surface of the first gear 133 and the first gear 133 is thus braked.

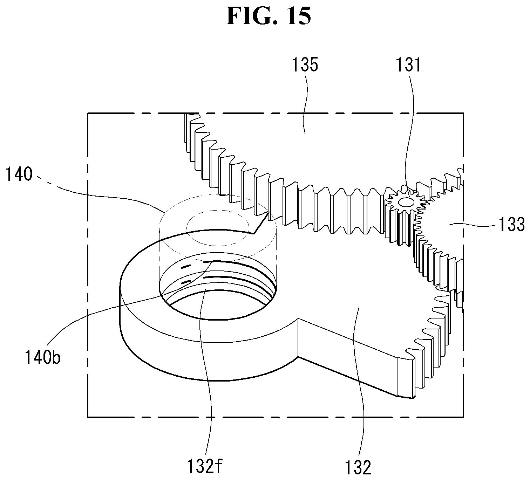

Unlike this, as illustrated in FIG. 15, threads 140b which are engaged with each other may be formed in the output gear 132 and the valve output shaft 140.

In this case, a thread 132f of the output gear 132 and a thread 140b of the valve output shaft 140 may not be engaged with each other within the normal actuation range of the valve actuator, and the output gear 132 may rotate together with the valve output shaft 140.

Accordingly, the thread 132f of the output gear 132 and the thread 140b of the valve output shaft 140 may be formed with a predetermined height difference within the normal actuation range of the valve actuator.

However, when the motor 120 is driven and the output gear 132 is thus rotated, the path of the ball valve is closed, and even then, when the motor 120 is continuously driven, the thread 132f of the output gear 132 and the thread 140b of the valve output shaft are engaged with each other, and as a result, the friction pad 132e of the output gear 132 is in close contact with the lower surface of the first gear 133 while the output gear 132 moves upward, and the first gear 133 is thus braked.

Accordingly, the valve output shaft 140 is rotated and the path of the ball valve is thus closed, and then the driving force of the motor 120 is not transmitted to the valve output shaft 140 even though the driving of the motor 120 is not stopped, but the motor 120 is continuously driven.

Accordingly, the motor and/or the gear assembly are/is prevented from being damaged due to the over-torque.

In addition, since the valve actuator of the present disclosure uses the lift member or the friction member having a simple structure, the durability and the driving stability of the valve actuator are secured.

In addition, since the valve actuator of the present disclosure need not include a separate electronic switch and a separate PCB for the motor stop signal, the instability of the electronic switch or the electronic sensor is removed, and the complexity and the material cost of the device are improved.

Hereinabove, the valve actuator for controlling the ball valve provided in the air conditioner has been described, but the valve actuator according to the present disclosure may be used in a valve for controlling a path of gas or a fluid.

## Claims

1. A valve actuator comprising:
a motor (120);
a gear assembly including an input gear (131) rotated by driving force of the motor (120), an output gear (132) receiving rotational force of the input gear (131), and at least one power transmission gear transmitting the rotational force of the input gear (131) to the output gear (132);
a case (110) in which the gear assembly is installed;
a valve output shaft (140) coupled to the output gear (132) and configured to be actuated to close a valve (10); and
a selective power transmission unit for interrupting rotation of the output gear (132) after the output gear (132) is rotated at a predetermined angle by the rotational force of the input gear (131),
wherein the power transmission gear includes a first gear (133) coupled to the input gear (131), a second gear (134) coupled to the first gear (133), and a third gear (135) coupled to each of the second gear (134) and the output gear (132),
**characterized in that** the selective power transmission unit includes a lift member (150 or 150') configured to disengage the first gear (133) from the second gear (134) by the lift member (150, 150') moving and thus pushing the first gear (133) away from the second gear (134) due to interference with a portion of the output gear (132) after the output gear (132) is rotated at the predetermined angle.

2. The valve actuator of claim 1, wherein the motor (120) is installed outside or on the case (110).

3. The valve actuator of claim 1, wherein the lift member (150) includes a body (150a) connected to the valve output shaft (140) on or above an upper side of the output gear (132), and a lever (150b) extended from the body (150a) and having an end portion positioned on or below a lower side of the first gear (133).

4. The valve actuator of claim 3, wherein a projection (132c) is formed on one of the output gear (132) and the body (150a) and a groove portion (150c) into which the projection (132c) is inserted is formed at the other one of the output gear (132) and the body (150a), and
a guide groove (140a) guiding vertical movement of the body (150a) is formed at one of the valve output shaft (140) and the body (150a), and a guide portion (150d) inserted into the guide groove (140a) is formed at the other one of the valve output shaft (140) and the body (150a).

5. The valve actuator of claim 3 or 4, wherein an elastic member (160) pressing the first gear (133) downward is positioned at an upper side of the first gear (133).

6. The valve actuator of any one of claims 3 to 5, wherein a friction pad (150e) providing frictional force to the first gear (133) is formed at the lever (150b) or the first gear (133).

7. The valve actuator of any one of claims 3 to 5, wherein a friction protrusion (150f) providing frictional force to the first gear (133) is formed at the lever (150b) or the first gear (133).

8. The valve actuator of claim 1 or 2, wherein the lift member (150') includes a body (150'a) fixed to a lateral portion of the output gear (132) and a lever (150'b) extended from the body (150'a) and having an end portion positioned on or below a lower side of the first gear (133).

9. The valve actuator of claim 8, wherein when the output gear (132) contacts the body (150'a), the body (150'a) is deformed so that the lever (150'b) contacts and pushes the first gear (133) away from the second gear (134).

10. A valve actuator comprising:
a motor (120);
a gear assembly including an input gear (131) rotated by driving force of the motor (120), an output gear (132) receiving rotational force of the input gear (131), and at least one power transmission gear transmitting the rotational force of the input gear (131) to the output gear (132);
a case (110) in which the gear assembly is installed;
a valve output shaft (140) coupled to the output gear (132) and configured to be actuated to close a valve (10); and
a selective power transmission unit for interrupting rotation of the output gear (132) after the output gear (132) is rotated at a predetermined angle by the rotational force of the input gear (131),
wherein the power transmission gear includes a first gear (133) coupled to the input gear (131), a second gear (134) coupled to the first gear (133), and a third gear (135) coupled to each of the second gear (134) and the output gear (132),
**characterized in that** the selective power transmission unit includes a friction member (132e) provided at the output gear (132) so as to brake the rotation of the first gear (133) by contact with the first gear (133) after the output gear (132) is rotated at the predetermined angle.

11. The valve actuator of claim 10, wherein the output gear (132) is installed at the valve output shaft (140) to be vertically movable,
wherein a projection portion (132d) is formed at one of the output gear (132) and the case (110), and an inclined surface (110a) on which the projection portion (132d) is positioned is formed at the other one of the output gear (132) and the case (110).

12. The valve actuator of claim 11, wherein both of the output gear (132) and the valve output shaft (140) comprises threads (132f, 140b) which are configured to engaged with each other after the output gear (132) is rotated at the predetermined angle.

## Patentansprüche

1. Ventilaktuator, aufweisend:
einen Motor (120);
eine Zahnradanordnung, welche ein Antriebszahnrad (131), das durch Antriebskraft des Motors (120) gedreht wird, ein Abtriebszahnrad (132), das Drehkraft des Antriebszahnrads (131) aufnimmt, und zumindest ein Leistungsübertragungszahnrad aufweist, das die Drehkraft des Antriebszahnrads (131) an das Abtriebszahnrad (132) überträgt;
ein Gehäuse (110), in dem die Zahnradanordnung installiert ist;
eine Ventilabtriebswelle (140), die an das Abtriebszahnrad (132) gekoppelt ist und dazu konfiguriert ist, betätigt zu werden, um ein Ventil (10) zu schließen; und
eine Einheit zur selektiven Leistungsübertragung zum Unterbrechen der Drehung des Abtriebszahnrads (132), nachdem das Abtriebszahnrad (132) durch die Drehkraft des Antriebszahnrads (131) in einem vorgegebenen Winkel gedreht ist,
wobei das Leistungsübertragungszahnrad ein an das Antriebszahnrad (131) gekoppeltes erstes Zahnrad (133), ein an das erste Zahnrad (133) gekoppeltes zweites Zahnrad (134) und ein an jedes von dem zweiten Zahnrad (134) und dem Abtriebszahnrad (132) gekoppeltes drittes Zahnrad (135) beinhaltet,
**dadurch gekennzeichnet, dass** die Einheit zur selektiven Leistungsübertragung ein Hebeglied (150 oder 150') beinhaltet, das dazu konfiguriert ist, das erste Zahnrad (133) dadurch von dem ersten Zahnrad (134) zu trennen, dass sich das Hebeglied (150, 150') bewegt und somit das erste Zahnrad (133) infolge Eingriffs mit einem Abschnitt des Abtriebszahnrads (132) von dem zweiten Zahnrad (134) weg bewegt, nachdem das Abtriebszahnrad (132) in dem vorgegebenen Winkel gedreht ist.

2. Ventilaktuator nach Anspruch 1, wobei der Motor (120) außerhalb des Gehäuses (110) oder an diesem installiert ist.

3. Ventilaktuator nach Anspruch 1, wobei das Hebeglied (150) Folgendes beinhaltet: einen Körper (150a), der auf oder über einer Oberseite des Abtriebszahnrads (132) mit der Ventilabtriebswelle (140) verbunden ist, und einen Hebel (150b), der sich von dem Körper (150a) erstreckt und einen Endabschnitt aufweist, der auf oder unter einer Unterseite des ersten Zahnrads (133) positioniert ist.

4. Ventilaktuator nach Anspruch 3, wobei an einem von dem Abtriebszahnrad (132) und dem Körper (150a) ein Vorsprung (132c) gebildet ist und dem anderen von dem Abtriebszahnrad (132) und dem Körper (150a) ein Nutabschnitt (150c) gebildet ist, in den der Vorsprung (132c) eingefügt ist, und
an einem von der Ventilabtriebswelle (140) und dem Körper (150a) eine Führungsnut (140a) gebildet ist, die die vertikale Bewegung des Körpers (150a) führt, und an dem anderen von der Ventilabtriebswelle (140) und dem Körper (150a) ein in die Führungsnut (140a) eingefügter Führungsabschnitt (150d) gebildet ist.

5. Ventilaktuator nach Anspruch 3 oder 4, wobei auf einer Oberseite des ersten Zahnrads (133) ein elastisches Glied (160) positioniert ist, das das erste Zahnrad (133) nach unten drückt.

6. Ventilaktuator nach einem der Ansprüche 3 bis 5, wobei auf dem Hebel (150b) oder dem ersten Zahnrad (133) ein Reibbelag (150e) gebildet ist, der dem ersten Zahnrad (133) Reibkraft bereitstellt.

7. Ventilaktuator nach einem der Ansprüche 3 bis 5, wobei an dem Hebel (150b) oder dem ersten Zahnrad (133) ein Reibvorsprung (150f) gebildet ist, der dem ersten Zahnrad (133) Reibkraft bereitstellt.

8. Ventilaktuator nach Anspruch 1 oder 2, wobei das Hebeglied (150') Folgendes beinhaltet: einen Körper (150'a), der an einem seitlichen Abschnitt des Abtriebszahnrads (132) befestigt ist, und einen Hebel (150'b), der sich von dem Körper (150'a) erstreckt und einen Endabschnitt aufweist, der auf oder unter einer Unterseite des ersten Zahnrads (133) positioniert ist.

9. Ventilaktuator nach Anspruch 8, wobei, wenn das Abtriebszahnrad (132) mit dem Körper (150'a) in Kontakt kommt, der Körper (150'a) verformt wird, sodass der Hebel (150'b) mit dem ersten Zahnrad (133) in Kontakt kommt und es von dem zweiten Zahnrad (134) weg schiebt.

10. Ventilaktuator, welcher aufweist:
einen Motor (120);
eine Zahnradanordnung, welche ein Antriebszahnrad (131), das durch Antriebskraft des Motors (120) gedreht wird, ein Abtriebszahnrad (132), das Drehkraft des Antriebszahnrads (131) aufnimmt, und zumindest ein Leistungsübertragungszahnrad aufweist, das die Drehkraft des Antriebszahnrads (131) auf das Abtriebszahnrad (132) überträgt;
ein Gehäuse (110), in dem die Zahnradanordnung installiert ist;
eine Ventilabtriebswelle (140), die an das Abtriebszahnrad (132) gekoppelt ist und dazu konfiguriert ist, betätigt zu werden, um ein Ventil (10) zu schließen; und
eine Einheit zur selektiven Leistungsübertragung zum Unterbrechen der Drehung des Abtriebszahnrads (132), nachdem das Abtriebszahnrad (132) durch die Drehkraft des Antriebszahnrads (131) in einem vorgegebenen Winkel gedreht ist,
wobei das Leistungsübertragungszahnrad ein an das Antriebszahnrad (131) gekoppeltes erstes Zahnrad (133), ein an das erste Zahnrad (133) gekoppeltes zweites Zahnrad (134) und ein an jedes von dem zweiten Zahnrad (134) und dem Abtriebszahnrad (132) gekoppeltes drittes Zahnrad (135) beinhaltet,
**dadurch gekennzeichnet, dass** die Einheit zur selektiven Leistungsübertragung ein Reibglied (132e) beinhaltet, das an dem Abtriebszahnrad (132) bereitgestellt ist, um die Drehung des ersten Zahnrads (133) durch Kontakt mit dem ersten Zahnrad (133) zu bremsen, nachdem das Abtriebszahnrad (132) in dem vorgegeben Winkel gedreht ist.

11. Ventilaktuator nach Anspruch 10, wobei das Abtriebszahnrad (132) an der Ventilabtriebswelle (140) installiert ist, um vertikal beweglich zu sein,
wobei an einem von dem Abtriebszahnrad (132) und dem Gehäuse (110) ein Vorsprungsabschnitt (132d) gebildet ist und an dem anderen von dem Abtriebszahnrad (132) und dem Gehäuse (110) eine Schräge (110a) gebildet ist, auf der der Vorsprungsabschnitt (132d) positioniert ist.

12. Ventilaktuator nach Anspruch 11, wobei sowohl das Abtriebszahnrad (132) als auch die Ventilabtriebswelle (140) Gewindegänge (132f, 140b) umfassen, die dazu konfiguriert sind, ineinander einzugreifen, nachdem das Abtriebszahnrad (132) in dem vorgegebenen Winkel gedreht ist.

## Revendications

1. Actionneur de soupape comprenant :
un moteur (120) ;
un ensemble d'engrenages comportant un engrenage d'entrée (131) tourné par une force de rotation du moteur (120), un engrenage de sortie (132) recevant une force de rotation de l'engrenage d'entrée (131), et au moins un engrenage de transmission de puissance transmettant la force de rotation de l'engrenage d'entrée (131) à l'engrenage de sortie (132) ;
un carter (110), dans lequel l'ensemble d'engrenages est installé ;
un arbre de sortie de soupape (140) couplé à l'engrenage de sortie (132) et configuré pour être actionné pour fermer une soupape (10) ; et
une unité de transmission de puissance sélective pour interrompre la rotation de l'engrenage de sortie (132) après que l'engrenage de sortie (132) a été mis en rotation selon un angle prédéterminé par la force de rotation de l'engrenage d'entrée (131),
dans lequel l'engrenage de transmission de puissance comporte un premier engrenage (133) couplé à l'engrenage d'entrée (131), un deuxième engrenage (134) couplé au premier engrenage (133), et un troisième engrenage (135) couplé à chacun du deuxième engrenage (134) et de l'engrenage de sortie (132),
**caractérisé en ce que** l'unité de transmission de puissance sélective comporte un élément de levage (150 ou 150') configuré pour dégager le premier engrenage (133) du deuxième engrenage (134) par l'élément de levage (150, 150') déplaçant et ainsi poussant le premier engrenage (133) à l'écart du deuxième engrenage (134) en raison de l'interférence avec une partie de l'engrenage de sortie (132) après que l'engrenage de sortie (132) a été tourné selon l'angle prédéterminé.

2. Actionneur de soupape selon la revendication 1, dans lequel le moteur (120) est installé à l'extérieur ou sur le carter (110).

3. Actionneur de soupape selon la revendication 1, dans lequel l'élément de levage (150) comporte un corps (150a) relié à l'arbre de sortie de soupape (140) sur ou au-dessus d'un côté supérieur de l'engrenage de sortie (132), et un levier (150b) s'étendant à partir du corps (150a) et présentant une partie d'extrémité positionnée sur ou au-dessous d'un côté inférieur du premier engrenage (133).

4. Actionneur de soupape selon la revendication 3, dans lequel une saillie (132c) est formée sur un de l'engrenage de sortie (132) et du corps (150a) et une partie de rainure (150c), dans laquelle la saillie (132c) est insérée, est formée sur l'autre de l'engrenage de sortie (132) et du corps (150a), et
une rainure de guidage (140a) guidant le déplacement vertical du corps (150a) est formée sur un parmi l'arbre de sortie de soupape (140) et le corps (150a), et une partie de guidage (150d) insérée dans la rainure de guidage (140a) est formée sur l'autre parmi l'arbre de sortie de soupape (140) et le corps (150a).

5. Actionneur de soupape selon la revendication 3 ou 4, dans lequel un élément élastique (160) pressant le premier engrenage (133) vers le bas est positionné sur un côté supérieur du premier engrenage (133).

6. Actionneur de soupape selon l'une quelconque des revendications 3 à 5, dans lequel un patin de friction (150e) fournissant une force de friction au premier engrenage (133) est formé sur le levier (150b) ou du premier engrenage (133).

7. Actionneur de soupape selon l'une quelconque des revendications 3 à 5, dans lequel une saillie de friction (150f) fournissant une force de friction au premier engrenage (133) est formée sur le levier (150b) ou le premier engrenage (133).

8. Actionneur de soupape selon la revendication 1 ou 2, dans lequel l'élément de levage (150') comporte un corps (150'a) fixé à une partie latérale de l'engrenage de sortie (132) et un levier (150'b) s'étendant à partir du corps (150'a) et présentant une partie d'extrémité positionnée sur ou au-dessous d'un côté inférieur du premier engrenage (133).

9. Actionneur de soupape selon la revendication 8, dans lequel lorsque l'engrenage de sortie (132) entre en contact avec le corps (150'a), le corps (150'a) est déformé de telle sorte que le levier (150'b) entre en contact avec le premier engrenage (133) et le pousse à l'écart du deuxième engrenage (134).

10. Actionneur de soupape comprenant :
un moteur (120) ;
un ensemble d'engrenages comportant un engrenage d'entrée (131) tourné par une force de rotation du moteur (120), un engrenage de sortie (132) recevant une force de rotation de l'engrenage d'entrée (131), et au moins un engrenage de transmission de puissance transmettant la force de rotation de l'engrenage d'entrée (131) à l'engrenage de sortie (132) ;
un carter (110), dans lequel l'ensemble d'engrenages est installé ;
un arbre de sortie de soupape (140) couplé à l'engrenage de sortie (132) et configuré pour être actionné pour fermer une soupape (10) ; et
une unité de transmission de puissance sélective pour interrompre la rotation de l'engrenage de sortie (132) après que l'engrenage de sortie (132) a été mis en rotation selon un angle prédéterminé par la force de rotation de l'engrenage d'entrée (131),
dans lequel l'engrenage de transmission de puissance comporte un premier engrenage (133) couplé à l'engrenage d'entrée (131), un deuxième engrenage (134) couplé au premier engrenage (133), et un troisième engrenage (135) couplé à chacun du deuxième engrenage (134) et de l'engrenage de sortie (132),
**caractérisé en ce que** l'unité de transmission de puissance sélective comporte un élément de friction (132e) prévu sur l'engrenage de sortie (132) de manière à freiner la rotation du premier engrenage (133) par le contact avec le premier engrenage (133) après que l'engrenage de sortie (132) a été tourné selon l'angle prédéterminé.

11. Actionneur de soupape selon la revendication 10, dans lequel l'engrenage de sortie (132) est installé sur l'arbre de sortie de soupape (140) de manière à être mobile verticalement,
dans lequel une partie en saillie (132d) est formée sur un parmi l'engrenage de sortie (132) et le carter (110), et une surface inclinée (110a), sur laquelle la partie en saillie (132d) est positionnée, est formée sur l'autre parmi l'engrenage de sortie (132) et le carter (110).

12. Actionneur de soupape selon la revendication 11, dans lequel l'engrenage de sortie (132) et l'arbre de sortie de soupape (140) comprennent tous deux des filetages (132f, 140b) qui sont configurés pour s'engager l'un avec l'autre après que l'engrenage de sortie (132) a été tourné selon l'angle prédéterminé.
